# EUROPÄISCHE PATENTSCHRIFT

(11) **EP 1 339 495 B1**
(45) Veröffentlichungstag und Bekanntmachung des Hinweises auf die Patenterteilung: **24.01.2018**
(21) Anmeldenummer: 01997349.4
(22) Anmeldetag: 26.11.2001
(51) Int. Cl.: B01L 3/00, B01J 19/00, G01N 27/327, C40B 60/14

(54) **VERFAHREN FÜR DIE BIOCHEMISCHE ANALYTIK UND ZUGEHÖRIGE ANORDNUNG**
METHOD FOR BIOCHEMICAL ANALYSIS AND CORRESPONDING ARRANGEMENT
PROCEDE D'ANALYSE BIOCHIMIQUE ET AGENCEMENT CORRESPONDANT

(30) Priorität: 24.11.2000 DE 10058394
(43) Veröffentlichungstag der Anmeldung: 03.09.2003
(73) Patentinhaber: Boehringer Ingelheim Vetmedica GmbH, 55216 Ingelheim am Rhein (DE)
(72) Erfinder: MUND, Konrad, 91080 Uttenreuth (DE); GUMBRECHT, Walter, 91074 Herzogenaurach (DE); STANZEL, Manfred, 91056 Erlangen (DE); HINTSCHE, Rainer, 13127 Berlin (DE)
(74) Vertreter: Von Rohr Patentanwälte Partnerschaft mbB
(86) Internationale Anmeldenummer: PCT/DE2001/004437
(87) Internationale Veröffentlichungsnummer: WO 2002/041992

(56) Entgegenhaltungen:
- WO-A-01/34842
- US-A- 5 604 130
- US-A- 6 143 496
- PROUDNIKOV D ET AL: "IMMOBILIZATION OF DNA IN POLYACRYLAMIDE GEL FOR THE MANUFACTURE OF DNA AND DNA-OLIGONUCLEOTIDE MICROCHIPS" ANALYTICAL BIOCHEMISTRY, ACADEMIC PRESS, SAN DIEGO, CA, US, Bd. 259, 1998, Seiten 34-41, XP002928888 ISSN: 0003-2697
- GUSCHIN D Y ET AL: "OLIGONUCLEOTIDE MICROCHIPS AS GENOSENSORS FOR DETERMINATIVE AND ENVIRONMENTAL STUDIES IN MICROBIOLOGY" APPLIED AND ENVIRONMENTAL MICROBIOLOGY, WASHINGTON,DC, US, Bd. 63, Nr. 6, 1. Juni 1997 (1997-06-01), Seiten 2397-2402, XP002064989 ISSN: 0099-2240

## Beschreibung

Die Erfindung bezieht sich auf ein Verfahren für die bio-chemische Analytik, unter Verwendung eines Mikroreaktions-arrays mit mindestens zwei Reaktionsräumen zur Aufnahme von Stoffen, die mit anderen Substanzen chemisch bzw. biochemisch reagieren. Daneben bezieht sich die Erfindung auch auf eine Anordnung zur Durchführung des Verfahrens.

Zur Entwicklung neuer Wirkstoffe in der Life Science Industrie (Pharmaka), Lebensmittel-Technologie, Agrar-Technik (Pflanzenschutz), in der medizinischen Diagnostik, aber auch zur Lösung von verschiedensten Aufgaben in der allgemeinen Biotechnologie, werden heute in zunehmendem Maße Methoden der kombinatorischen Analyse bzw. Synthese angewandt. Dazu werden z.B. sog. Mikro-Titerplatten-Techniken mit Reaktionswannen in Arraystruktur verwendet, die zur gleichzeitigen Reaktion auf einer Arrayfläche von beispielsweise ca.12x8cm² entweder 96 oder sogar 384 Wannen einsetzen. Die Dichte dieser Arrays wird in Zukunft weiter steigen, was bedeutet, dass verschiedenartige chemische Reaktionen in immer dichter angeordneten Reaktionsräumen stattfinden müssen.

Extrem ist die Situation z.B. bei einem Array von verschiedenen DNA-Färgermolekülen, die in einem Abstand von nur einigen zehn Mikrometern und einer Dichte von z.B. einigen hundert Positionen pro wenigen mm² auf einem ebenen Substrat angeordnet sind, dem sog. DNA-Chip. Sind beim analytischen Nachweis von z.B. unbekannter DNA frei bewegliche Moleküle beteiligt, kommt es bei solch dichten Arrays zu chemischem Übersprechen.

Die US 6, 143, 496 A offenbart ein Verfahren zur Detektion und Amplifizierung von Nukleinsäuren unter Verwendung eines Arrays von Probenkammern. Die Probenkammern des Arrays sind über einen Durchflusskanal miteinander verbunden, wobei über eine Verdrängungsflüssigkeit eine Isolierung der Probenkammern erreicht wird. Nach der Amplifizierung werden die Floreszenzen der Proben lasermikroskopisch detektiert.

Die US 5,604,130 A offenbart eine ablösbare Abdeckung zur Abdichtung von Behältern mit vielen Vertiefungen für die Aufnahme von flüssigen Proben. Die Abdichtung mittels der Abdichtung erfolgt dabei während eines Erhitzungs- oder Bewegungsschritts der Proben. Darüber hinaus weist die Abdeckung Leisten zu den Öffnungen der Vertiefungen gerichtete Leisten auf, die in der Gegenwart eines nach unten gerichteten Drucks komprimierbar sind, sodass die Öffnungen der Vertiefungen zumindest im Wesentlichen durch die Abdeckung abgedichtete werden. Die Ausdehnung der Leisten nach dem Entspannen des nach unten gerichteten Drucks bewirkt ein Auflösen der Abdichtung zwischen der Abdeckung und den Vertiefungsöffnungen.

Aus einer Reihe von Gründen, z.B. wegen der hohen Spezifität und der niedrigen Nachweisgrenze, bedient man sich bei der biochemischen Analytik häufig enzymgekoppelter Nachweisverfahren. Weit verbreitet sind z.B. in der medizinischen Diagnostik und im Forschungsbereich sog. ELISA(E̅nzy̅m-L̅inked I̅mmunoS̅orbent A̅ssay)-Tests. (Literatur s.h. B. Alberts et al. (eds.), Molekularbiologie der Zelle (1997), 3. Aufl., Seite 216, VCH Weinheim) Auch für Anwendungen auf dem Gebiet des DNA-Chips werden Verfahren mit Enzymmarkern bei einer bekannten Methode des Redox-(Re)cyclings eingesetzt (A.v.d.Berg, P. Bergveld (eds.) Proceedings of the uTAS '94 Workshop (1994), Seiten 249 bis 254, Kluwer Academic Publishers Dordrecht).

In allen in der Fachliteratur erwähnten Fällen liegt das Enzym nicht frei in der flüssigen Phase der als sog. Assays bezeichneten Anordnung vor, sondern ist gebunden und markiert so als "Enzym-Label" die primär nachzuweisende Substanz. Dabei erfolgt die "Bindung" der Enzymmoleküle an die nachzuweisende Substanz stets stöchiometrisch. Zur Amplifikation, d.h. Verstärkung, kommt es, indem das Enzym zugesetzte Substratmoleküle mit hoher Geschwindigkeit umsetzt. Dieser Umsatz wird, je nach verwendetem Substrat bzw. entstehendem Produkt, beispielsweise optisch oder elektrochemisch quantifiziert. Hierfür wird - unabhängig vom eingesetzten Verfahren - insbesondere die Konzentrationszunahme des Produktes P, d.h. die zeitabhängige Funktion dc(P)/dt, verfolgt.

Werden solche Assays in einem Array, wie beim Stand der Technik im Einzelnen beschriebenen ist, durchgeführt, können vom Enzym gebildete, frei bewegliche Reaktionsprodukte auch benachbarte enzymfreie Arraypositionen erreichen und dort die Gegenwart der Enzym-Label vortäuschen. Man spricht vom Übersprechen, was zu Messfehlern führt und somit falsche Ergebnisse liefern kann.

Davon ausgehend ist es Aufgabe der Erfindung, Verfahren und zugehörige Anordnungen anzugeben, mit denen gegenüber dem Stand der Technik eine erhöhte Verlässlichkeit durch Vermeidung von Übersprechen und damit Ausschluss von "falsch positiven" Resultaten sichergestellt ist. Mit einer erhöhte Genauigkeit sollen Verbesserungen insbesondere in der Effektivität der Messungen erreicht werden.
Die Aufgabe ist erfindungsgemäß bei einem Verfahren der eingangs genannten Art durch die Maßnahmen des Patentanspruches 1 gelöst. Weiterbildungen sind in den abhängigen Verfahrensansprüchen angegeben. Eine zugehörige Anordnung ist Gegenstand des Patentanspruches 5. Diesbezügliche Weiterbildungen sind in den abhängigen Sachansprüchen angegeben.
Beim erfindungsgemäßen Verfahren werden lokal abgegrenzte Reaktionsräume als erstes Volumen verwendet, wobei die Reaktionsräume über ein zweites Volumen, dem sog. Versorgungsvolumen, miteinander verbunden werden können und in den einzelnen Reaktionsräumen quantitativ und/oder spezies-differente chemische bzw. biochemische Reaktionen ablaufen. Unter spezies-differente Reaktionen werden qualitativ unterschiedliche bzw. qualitativ differente Prozesse verstanden. Dabei wird gleichermaßen der Stoffaustausch zwischen Reaktionsräumen und dem Versorgungsvolumen je nach Bedarf in einer oder beiden Richtungen zugelassen oder verhindert.
Wesentlicher Vorteil der Erfindung ist, dass trotz der eng benachbarten Reaktionsräume nunmehr ein störendes Übersprechen, das die Messergebnisse verfälschen kann, unmöglich gemacht wird und somit die Selektivität verbessert wird. Außerdem wird durch die Erfindung auch die Nachweisempfindlichkeit erhöht, d.h. die Nachweisgrenze wird zu geringeren Mengen verschoben.
Zur praktischen Realisierung der Nachweisempfindlichkeits-Erhöhung ist es sinnvoll, die zeitliche Änderung der Substrat/Produktkonzentration möglichst zu steigern. Dies wird beim erfindungsgemäßen Verfahren durch eine gezielte Verringerung des Reaktionsvolumens auf deutlich kleiner 1 µl insbesondere im Bereich von einem Nanoliter(1nl), und einer damit verbundenen Steigerung der Substrat-Produktkonzentrations-Änderungen erreicht.
Bei den erfindungsgemäßen Anordnungen handelt es sich jeweils um Arrays von mehr als zwei, typisch aber mit einigen hundert Positionen auf wenigen Quadratmillimetern, vorzugsweise 1 bis ca. 10 mm², die auf einem planaren Substrat angeordnet sind. Das jeweilige Array ist als Reaktionsräume- bzw. Reaktionskammer-Array ausgeführt und ist Bestandteil eines Behältnisses mit einem für die Reaktionsräume gemeinsam zugänglichen Versorgungsvolumen. Ein solches Versorgungsvolumen kann z.B. durch Einbettung des Reaktionskammer-Arrays in einer Durchflusszelle, über die das gesamte Fluidhandling der für die Nachweis- oder Synthese-Reaktion notwendigen chemischen/biochemischen Stoffe abgewickelt werden kann, realisiert werden.
Mittels einer in der Durchflusszelle dem planaren Substrat gegenüberliegenden elastischen Membran oder Schicht, die z.B. aus Silikongummi bestehen kann, werden bei einer ersten vorzugsweisen Ausführungsform der Erfindung durch Anpressen einer mechanischen Vorrichtung an das Substrat die durch die einzelnen Arraypositionen gebildeten Reaktionsräume voneinander getrennt, so dass ein Übersprechen wirksam verhindert wird. Eine solche Vorrichtung kann z.B. in Form eines Deckels, eines Stempels oder einer dichtenden Membran ausgebildet sein, mit denen die von den Reaktionsräumen gebildeten Kavitäten verschlossen werden. Mit dem Verschließen der Kavitäten findet auch eine Volumenverringerung der Flüssigkeitsräume über den einzelnen Arraypositionen statt, so dass die durch die chemischen/biochemischen Reaktionen ausgelöste Konzentrationsänderung von Substrat/Produkt erhöht wird. Damit wird also vorteilhafterweise ebenfalls die Nachweisempfindlichkeit gesteigert.

Gleiches kann durch Überschichtung mit einer Sperrflüssigkeit bei einer nicht beanspruchten Ausführungsform erreicht werden. Sobald eine geeignete Sperrflüssigkeit, die nicht mischbar mit der Flüssigkeit in den Reaktionskavitäten ist, den Durchflusskanal erfüllt, führt dies zu den gleichen Effekten wie das Verschließen der Arraykavitäten mittels eines Silikonstempels. Die Sperrflüssigkeit ist dabei z.B. Silikonöl. In einer vorteilhaften Variante dieser Ausführungsform werden die Reaktionsräume mit Hydrogel gefüllt, um so den wasserhaltigen Reaktionsräumen mechanische Stabilität zu verleihen, wenn die Sperrflüssigkeit in den Durchflusskanal eintritt. Als Hydrogeil kann z.B. Polyacrylamid verwendet werden, das gegenüber Silikonöl die geforderten Eigenschaften aufweist. Bei einem weiteren nicht beanspruchten Verfahren kann auch ein unterschiedliches chemisches Löslichkeitsverhalten der beteiligten Stoffe und Substanzen ausgenutzt werden. Auch bei dieser Ausführungsform der erfindungsgemäßen Anordnung werden die Reaktionsräume vorteilhaft mit einem Hydrogel gefüllt. Ein unterschiedliches Löslichkeitsverhalten zwischen Hydrogel-Reaktionsraum und einer geeigneten flüssigen Phase im Durchflusskanal des Versorgungsvolumens sorgt dann dafür, dass Reaktions-Edukte aus der flüssigen Phase in die Hydrogelphase eintreten, Reaktionsprodukte die Hydrogelphase jedoch nicht mehr verlassen können. Ein solches Reaktions-Edukt ist z.B. das Enzymsubstrat.
Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen jeweils in schematischer Darstellung
- Figur 1: einen Messaufbau nach dem Stand der Technik, aus der das Messverfahren einerseits und das störende Übersprechen andererseits ersichtlich ist,
- Figur 2: in drei Teilschritten eine beispielhafte Anordnung zum mechanischen Verschließen von Kavitäten,
- Figur 3: in drei Teilschritten eine entsprechende Anordnung zum Verschließen der Kavitäten mittels Sperrmedien und
- Figur 4: in drei Teilschritten eine dritte Anordnung, bei der das Verschließen der Kavitäten durch unterschiedliches Löslichkeitsverhalten der beteiligten Medien erreicht wird.
In den Figuren haben gleiche bzw. gleichwirkende Teile gleiche bzw. sich entsprechende Bezugszeichen. Die Figuren werden nachfolgend teilweise gemeinsam beschrieben.

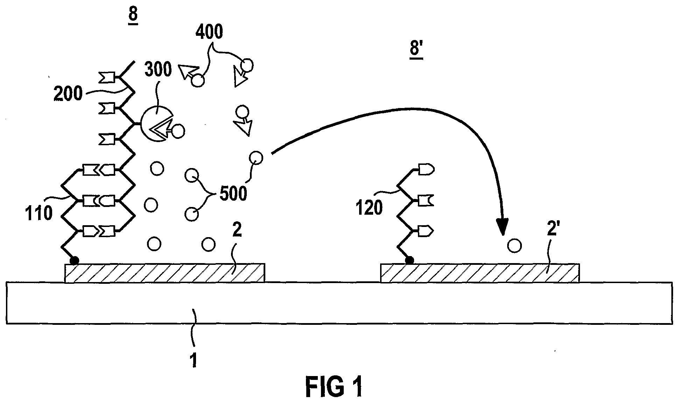

In Figur 1 ist mit 1 ein Substrat mit planarer Oberfläche bezeichnet, das beispielsweise durch die kristallographische Oberfläche eines Silizium-Chips gebildet ist. Auf dem Substrat 1 ist ein Array von elektrischen Detektoren 2, 2', ... auf Arraypositionen 8, 8', ... realisiert, mit denen bioanalytische Untersuchungen mit sog. enzymgekoppelten Reaktionen vorgenommen werden, wozu Fängermoleküle einerseits und Analytmoleküle andererseits verwendet werden. Auf den Arraypositionen 8, 8', ... befinden sich unterschiedliche Fängermoleküle 110, 120, ..., so dass auf jeder spezifischen Arrayposition unterschiedliche Analytmoleküle nachgewiesen werden können.
Im Einzelnen ist in Figur 1 bei einem Verfahren für bioanalytischen Untersuchungen ein erstes Fänger-Molekül mit 110 auf der Arrayposition 8 und ein zweites Fängermolekül 120 auf der Arrayposition 8', ein Analyt-Molekül mit 200 und ein sog. Enzym-Label mit 300 bezeichnet. Dabei reagiert beispielsweise das Fängermolekül 110 spezifisch mit einem komplementären Analytmolekül 200 und immobilisiert so im Array positionsspezifisch einen Enzym-Label 300. Ein anschließend als Edukt zugegebenes Enzym-Substrat 400 wird durch die katalytische Wirkung des Enzym-Labels 300 in ein Produkt 500 überführt.

Das Analyt-Molekül 200 kann in Figur 1 also nur mit dem Fängermolekül 110, nicht aber mit dem Fängermolekül 120 reagieren. Auf jeder Arrayposition 8, 8', ... des Wafers 1 kann mit Hilfe des dort lokalisierten elektrischen Detektors 2, 2', ... die Abnahme/Zunahme von Substrat/Produkt gemessen werden. Speziell elektrische Detektoren haben Vorteile der Messtechnik.
Entsprechend dem Stand der Technik ist man bemüht, die Arraypositionen 8, 8', ... und deren Abstände- möglichst klein auszubilden. Problematisch ist beim Stand der Technik, dass ein sog. chemisches Übersprechen zwischen den einzelnen Positionen 8, 8', ... auftreten kann. Dies bedeutet, dass entweder Enzym-Substrat 400, das vorstehend als Edukt definiert wurde, oder das Reaktionsprodukt 500 von einer ersten Arrayposition 8 auf eine zweite Arrayposition 8' gelangen kann. Falls eine Nachbarposition erreicht ist, wird ein falsches Signal erzeugt, das ein positives Ergebnis vortäuscht. In der Praxis spricht man auch von einem "falsch positiven" Signal.

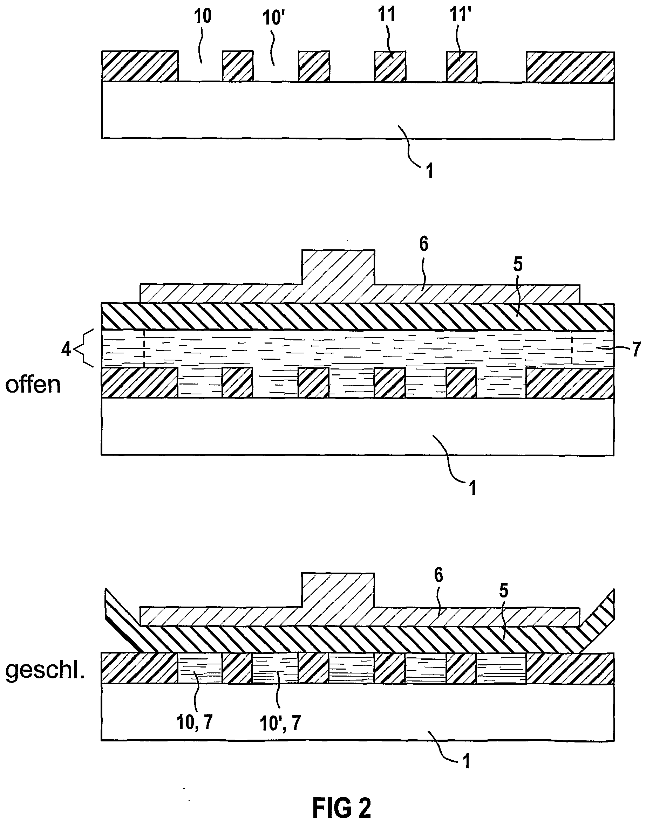

In den Figuren 2 bis 4 sind für unterschiedliche Alternativen einzelne Reaktionsräume 10, 10', ... mit einem Einzelvolumen von jeweils kleiner 1µl in einer Arraykonfiguration angeordnet. Die Reaktionsräume 10, 10', ... sind dabei betriebsmäßig voneinander getrennt.
In Figur 2 ist in drei Teilschritten das Betätigen einer Anordnung verdeutlicht, bei der Reaktionsräume 10, 10', ... durch Wände 11, 11', ... getrennt sind. Die Wände 11, 11' können in einer besonderen geometrischen Ausführungsform durch photostrukturierte, kreisförmige Polymerringe von z.B. 150 µm innerem Durchmesser, 180 µm äußerem Durchmesser sowie 50 µm Höhe realisiert werden. Die Reaktionsräume 10, 10', ... sind beispielsweise mit in einem Elektrolyten 7 gelösten Reaktions-Edukt, z.B. einem Enzym-Substrat, befüllt, wobei der Elektrolyt 2 über ein Versorgungsvolumen 4 den einzelnen Reaktionsräumen zugeführt wird.
Die Reaktionsräume 10, 10', ... können in Figur 2 durch ein Gehäuseoberteil 5 mittels eines mechanischen Stempels 6 abgeschlossen werden. Im offenen Zustand befindet sich über den Kavitäten ein Versorgungsvolumen 4 mit einem flüssigen Elektrolyten. In Figur 2 werden zuerst die Reaktionsräume 10, 10', ... als bei entferntem Gehäuseoberteil 5 offene Kammern im Durchfluss mit dem Elektrolyten/Edukt 7 befüllt, wobei das Reservoir für den Elektrolyten 7 hier nicht im Einzelnen dargestellt ist. Nach Befüllung der Reaktionskavitäten 10, 10', ... mit Elektrolyt/Edukt 7 wird mittels des Stempels 6 das Gehäuseoberteil 5, das z.B. aus einer Silikonmembran bestehen kann, auf die Wandungen 11, 11', ..., die wie bereits erwähnt aus Polyimid bestehen, aufgesetzt. Damit werden die Reaktionsräume 10, 10', ... abgeschlossen, so dass anschließend ein Stoffaustausch verhindert wird.

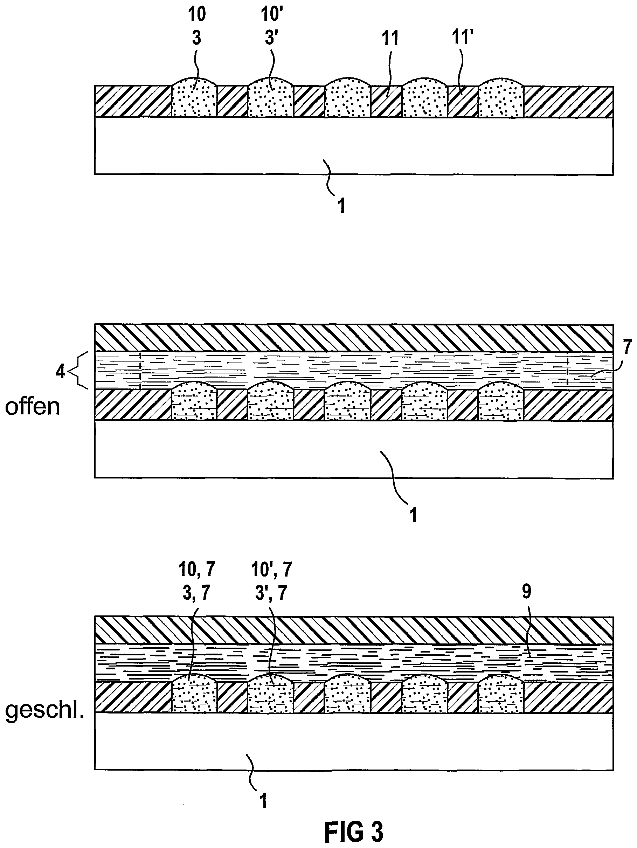

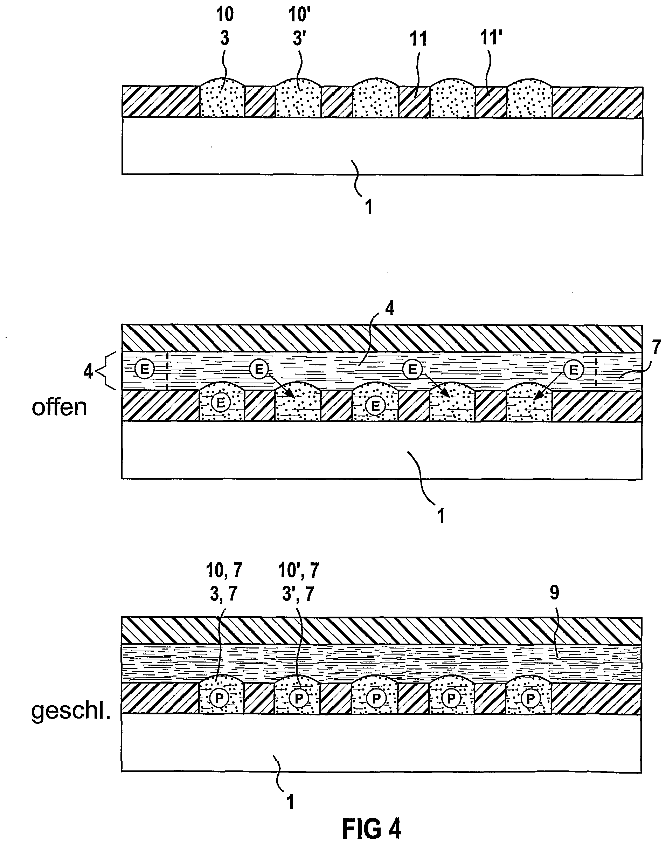

In Figur 3, einer nicht beanspruchten Ausführung, der untere Bereich ähnlich Figur 2 aufgebaut. Die Wände 11, 11', ... können in einer besonderen Ausführungsform, was in der zeichnerischen Wiedergabe der Figur 3 nicht ersichtlich ist, speziell durch photostrukturierte, kreisförmige Polymerringe mit innerem Durchmesser d (d=2r) von z.B. d=150 µm, äußerem Durchmesser D von z.B. D=180 µm einer Höhe h von z.B. sowie h=5 µm realisiert sein. Die aus solchen Abmessungen resultierenden Reaktionskavitäten mit einem Füllvolumen von etwa 0,1 nl (r²πh = (75 µm)²*3.14*5 µm) werden in dieser besonderen Ausführungsform mit einem Hydrogel 3 hoher Wasseraufnahmefähigkeit, z.B. Polyacrylamid, gefüllt. Im Hydrogel 3 kann dann eine Fänger-DNA für einen spezifischen DNA-Nachweis immobilisiert eingebracht werden.
Zur Realisierung des Assays werden die Reaktionsräume 10, 10', ... wiederum über das gemeinsame Versorgungsvolumen 4 mit Puffer, Reagenzien und schließlich Enzymsubstrat versorgt. Nachdem das Hydrogel 3 eines jeden Reaktionsraumes 10, 10' mit Enzym-substrathaltigem Puffer ins Gleichgewicht gebracht wurde und der enzymatische Umsatz begonnen hat, wird das Versorgungsvolumen 4 mit einer Sperrflüssigkeit, z.B. Silikonöl, geflutet. Dies bewirkt, dass die Flüssigkeit über den Reaktionsräumen durch Silikonöl verdrängt wird. Die Hydrogelstruktur sorgt für die mechanische Stabilität der Reaktionsräume. Aufgrund der Unlöslichkeit von Enzymprodukt in Silikonöl wird Diffusion desselben aus dem Hydrogel heraus, hin zu Nachbarreaktionsräumen verhindert. Das Reaktionsprodukt kann sich so in den Reaktionsräumen stark anreichern ohne die Nachbarreaktionsräume zu erreichen. Es ist also eine gleichermaßen hohe Empfindlichkeit und hohe Selektivität vorhanden.
Wesentlich ist bei beiden Ausführungsbeispielen gemäß Figur 2 und 3, dass die einzelnen Reaktionskavitäten 10, 10', ... zuerst mit dem Elektrolyten 7 im Durchlauf aus dem Versorgungsvolumen 4 befüllt werden und dann ein Material, beispielsweise ein Silikonöl 9, das mit dem Elektrolyten 7 Phasengrenzen bildet, aufgebracht wird. Durch die Phasengrenze wird erreicht, dass nunmehr ein Stoffaustausch nicht mehr möglich ist und störende Verfälschungen ausgeschlossen werden.
In der spezifischen Variante der Ausführungsform gemäß Figur 3 werden die Reaktionsräume 10, 10', ... mit Hydrogel 3, z.B. Polyacrylamid, gefüllt, um so den wasserhaltigen Reaktionsräumen 10, 10', ... mechanische Stabilität zu verleihen, wenn die Sperrflüssigkeit 9, z.B. Silikonöl, in den Durchflusskanal eintritt. Das nicht beanspruchte Ausführungsbeispiel nach Figur 4 entspricht vom Aufbau wiederum im Wesentlichen Figur 2. Die Reaktionsräume 10, 10', ... werden entsprechend Figur 2 und Figur 3 im Durchlauf aus dem Versorgungsvolumen 4 befüllt. In diesem Fall haben aber die Reaktions-Edukte, die hier mit E bezeichnet sind, das Vermögen, durch ihr spezifisches Löslichkeitsverhalten in den nach Befüllung in den Reaktionsräumen 10, 10', ... befindlichen Elektrolyten 7 einzudringen.

Bei der Anordnung gemäß Figur 4 läuft die Reaktion in den Reaktionskammern dann wie bereits vorstehend beschrieben ab. Durch das spezifische Löslichkeitsverhalten des entstehenden Reaktionsproduktes, das hier mit P bezeichnet ist, ist bei der Reaktion allerdings ein Stoffaustritt von P nicht möglich. Es wird also somit ebenfalls das störende Übersprechen verhindert. Auch in dieser Ausführungsform werden entsprechend Figur 3 die Reaktionsräume vorteilhaft mit einem Hydrogel 3 gefüllt.

Das beschriebene Verfahren und die zugehörigen Anordnungen können insbesondere erfolgreich in der medizinischen Diagnostik und der Biotechnologie eingesetzt werden. Durch den nunmehr erreichten Ausschluss des Übersprechens als wesentliche Fehlerquelle lassen sich damit genauere Ergebnisse als bisher erzielen.

## Patentansprüche

1. Verfahren für die biochemische Analytik, unter Verwendung eines auf einem planaren Substrat (1) angeordneten Mikroreaktionsarrays mit mindestens zwei durch Arraypositionen (8, 8', ...) gebildete Reaktionsräume (10, 10', ...) zur Aufnahme von Stoffen, die miteinander chemisch bzw. biochemisch reagieren, mit folgenden Maßnahmen:
- es werden lokal abgegrenzte Reaktionsräume (10, 10', ...) als erstes Volumen verwendet, wobei die Reaktionsräume (10, 10', ...) jeweils ein Volumen von weniger als 1 µl aufweisen,
- die Reaktionsräume (10, 10', ...) sind über ein zweites Volumen, dem sog Versorgungsvolumen (4), miteinander verbunden und als flüssigkeitsgefüllte Hohlräume offen zum Zwecke des Stoffaustauschs, so dass sie in Kontakt mit dem Versorgungsvolumen (4) stehen und somit gleichzeitig füllbar sind,
- in den einzelnen Reaktionsräumen (10, 10', ...) laufen quantitativ und/oder spezies-differente chemische bzw. biochemische Reaktionen ab, und
- der Stoffaustausch zwischen Reaktionsräumen (10, 10', ...) und dem Versorgungsvolumen (4) wird je nach Bedarf in einer oder beiden Richtungen zugelassen oder verhindert,
**dadurch gekennzeichnet,**
**dass** über ein Array von elektrischen Detektoren (2, 2', ...) auf den Arraypositionen (8, 8', ...) bioanalytische Untersuchungen mit enzymgekoppelten Reaktionen unter Bildung von frei beweglichen Reaktionsprodukten (500) vorgenommen werden, wozu Fängermoleküle (110, 120, ...) einerseits und Analytmoleküle andererseits verwendet werden, wobei sich auf den Arraypositionen (8, 8', ...) unterschiedliche Fängermoleküle (110, 120, ...) befinden, so dass auf jeder spezifischen Arrayposition unterschiedliche Analytmoleküle nachgewiesen werden können, und
**dass** durch Anpressen einer mechanischen Vorrichtung an das Substrat (1) die Reaktionsräume (10. 10', ...) voneinander getrennt werden, so dass ein Gelangen der Reaktionsprodukte (500) von einer ersten Arrayposition (8) auf eine zweite Arrayposition (8') wirksam verhindert wird.

2. Verfahren nach Anspruch 1, **dadurch gekennzeichnet, dass** die mechanische Vorrichtung in Form eines Deckels, eines Stempels oder einer dichtenden Membran ausgebildet ist.

3. Verfahren nach Anspruch 1 oder 2, **dadurch gekennzeichnet, dass** zu einem ersten Zeitpunkt (tl) ein definierter Stoffaustausch zwischen den Reaktionsräumen (10, 10', ...) und dem Versorgungsvolumen erfolgt und zu einem zweiten Zeitpunkt (t2) der Stoffaustausch zwischen den Reaktionsräumen (10, 10', ...) weitestgehend unterdrückt oder verhindert wird.

4. Verfahren nach einem der vorhergehenden Ansprüche, **gekennzeichnet durch** die Anwendung beim Redoxrecycling.

5. Anordnung zur Durchführung des Verfahrens nach einem der Ansprüche 1 bis 4 unter Verwendung eines auf einem planaren Substrat (1) Mikroreaktionsarrays,
wobei das Mikroreaktionsarray wenigstens zwei durch Arraypositionen (8, 8', ...) gebildete Reaktionsräume (10, 10', ...) zur Aufnahme von Stoffen aus einem Versorgungsvolumen (4) aufweist,
wobei die Reaktionsräume (10, 10', ...) jeweils ein Volumen von weniger als 1 µl aufweisen,
wobei die Reaktionsräume (10, 10', ...) flüssigkeitsgefüllte Hohlräume sind, die zum Zwecke des Stoffaustauschs offen sind, so dass sie in Kontakt mit dem Versorgungsvolumen (4) stehen und somit gleichzeitig füllbar sind,
wobei die Anordnung dazu ausgebildet ist, den Stoffaustausch zwischen Reaktionsräumen (10, 10', ...) und dem Versorgungsvolumen (4) je nach Bedarf in einer oder beiden Richtungen zuzulassen oder zu verhindern,
**dadurch gekennzeichnet,**
**dass** die Anordnung zur Durchführung bioanalytischer Untersuchungen mit enzymgekoppelten Reaktionen unter Bildung von frei beweglichen Reaktionsprodukten ausgebildet ist und ein Array von elektronischen Detektoren (2, 2', ...) auf den Arraypositionen (8, 8', ...) aufweist, wobei sich auf den Arraypositionen (8, 8', ...) des Mikroreaktionsarrays unterschiedliche Fängermoleküle (110, 120, ...) befinden, so dass auf jeder spezifischen Arrayposition unterschiedliche Analytmeloküle nachgewiesen werden können, und
**dass** eine mechanische Vorrichtung vorgesehen ist, die durch Anpressen an das Substrat (1) die Reaktionsräume (10, 10', ...) voneinander trennt, so dass ein Gelangen der Reaktionsprodukte (500) von einer ersten Arrayposition (8) auf eine zweite Arrayposition (8') wirksam verhindert wird.

6. Anordnung nach Anspruch 5, **dadurch gekennzeichnet, dass** die mechanische Vorrichtung in Form eines Deckels, eines Stempels oder einer dichtenden Membran ausgebildet ist.

7. Anordnung nach Anspruch 5 oder 6, **dadurch gekennzeichnet, dass** das planare Array (8, 8', ...) auf einem Silizium-Substrat (1) aufgebracht ist.

8. Anordnung nach Anspruch 7, **dadurch gekennzeichnet, dass** die Reaktionsräume (10, 10', ...) durch eine auf Silizium aufgebrachte Polymerschicht (11) voneinander getrennt sind.

9. Anordnung nach Anspruch 7, **dadurch gekennzeichnet, dass** die Reaktionsräume (10, 10',...) in das Silizium-Substrat (1) durch Mikrostrukturtechnik eingebracht sind.

10. Anordnung nach Anspruch 5, **dadurch gekennzeichnet, dass** der Verschluss durch eine planare, partiell elastische Polymerschicht (5), wie z.B. Silicongummi realisiert ist und dass vorzugsweise das Schließen der Öffnung der Reaktionsräume (10, 10', ...) durch Verdrängen des Versorgungsvolumens (4) erfolgt.

11. Anordnung nach Anspruch 10, **dadurch gekennzeichnet, dass** zum Verdrängen des Versorgungsvolumens (4) Gas, beispielsweise Luft, oder eine nicht mischbare Flüssigkeit (9) vorhanden ist.

12. Anordnung nach einem der Ansprüche 5 bis 11, **dadurch gekennzeichnet, dass** die Reaktionsräume (10, 10', ...) durch gelgefüllte Hohlräume (3), die zum Zwecke des Stoffaustausches eine Phasengrenze Gel/Versorgungsvolumen besitzen, realisiert sind.

13. Anordnung nach Anspruch 12, **dadurch gekennzeichnet, dass** durch Verschließen der Phasengrenze der Stoffaustausch der gelgefüllten Reaktionsräume (10, 10', ...) unterbindbar ist.

## Claims

1. Method for biochemical analysis using a microreaction array arranged on a planar substrate (1) with at least two reaction chambers (10, 10', ...) formed by array positions (8, 8', ...) for receiving substances which chemically and/or biochemically react with one another, comprising the following measures:
- locally delimited reaction chambers (10, 10', ...) are used as a first volume, the reaction chambers (10, 10', ...) each having a volume of less than 1 µl,
- the reaction chambers (10, 10', ...) are connected to one another via a second volume, the so-called supply volume (4), and are open as liquid-filled cavities for the purpose of mass transfer, so that they are in contact with the supply volume (4) and can therefore be filled simultaneously,
- chemical and/or biochemical reactions take place in the individual reaction chambers (10, 10', ...) quantitatively and/or differentiated by species, and
- the mass transfer between reaction chambers (10, 10', ...) and the supply volume (4) is permitted or prevented in one or both directions as required,
**characterized**
**in that** via an array of electrical detectors (2, 2', ...) on the array positions (8, 8', ...) bioanalytical tests with enzyme-linked reactions under formation of freely movable reaction products (500) are carried out, for which purpose capture molecules (110, 120, ...), on the one hand, and analyte molecules, on the other hand, are used, wherein on the array positions (8, 8', ...) there are different capture molecules (110, 120, ...), so that different analyte molecules can be detected on each specific array position, and
**in that** by pressing a mechanical device onto the substrate (1), the reaction chambers (10, 10', ...) are separated from one another, so that moving of the reaction products (500) from a first array position (8) to a second array position (8') is effectively prevented.

2. Method according to claim 1, **characterized in that** the mechanical device is embodied in the form of a cover, a ram or a sealing membrane.

3. Method according to claim 1 or 2, **characterized in that** at a first time (t1), a defined mass transfer takes place between the reaction chambers (10, 10', ...) and
the supply volume, and, at a second time (t2), mass transfer between the reaction chambers (10, 10', ...) is as far as possible suppressed or prevented.

4. Method according to any one of the preceding claims, **characterized by** its use in Redox recycling.

5. Arrangement for performing the method according to any one of claims 1 to 4, using a microreaction array on a planar substrate (1),
wherein the microreaction array has at least two reaction chambers (10, 10', ...) formed by array positions (8, 8', ...) for receiving substances from a supply volume (4),
wherein the reaction chambers (10, 10', ...) each have a volume of less than 1 µl,
wherein the reaction chambers (10, 10', ...) are liquid-filled cavities, which are open for the purpose of mass transfer, so that they are in contact with the supply volume (4) and can therefore be filled simultaneously,
wherein the arrangement is adapted to permit or prevent the mass transfer between reaction chambers (10, 10', ...) and the supply volume (4) in one or both directions as required,
**characterized**
**in that** the arrangement is adapted to perform bioanalytical tests with enzyme-linked reactions under formation of freely movable reaction products (500) and has an array of electrical detectors (2, 2', ...) on the array positions (8, 8', ...), wherein on the array positions (8, 8', ...) of the microreaction array there are different capture molecules (110, 120, ...), so that different analyte molecules can be detected on each specific array position, and
**in that** a mechanical device is provided, which separates the reaction chambers (10, 10', ...) from one another by pressing onto the substrate (1), so that moving of the reaction products (500) from a first array position (8) to a second array position (8') is effectively prevented.

6. Arrangement according to claim 5, **characterized in that** the mechanical device is embodied in the form of a cover, a ram or a sealing membrane.

7. Arrangement according to claim 5 or 6, **characterized in that** the planar array (8, 8', ...) is applied to a silicon substrate (1).

8. Arrangement according to claim 7, **characterized in that** the reaction chambers (10, 10', ...) are separated from one another by a polymer layer (11) applied to silicon.

9. Arrangement according to claim 7, **characterized in that** the reaction chambers (10, 10', ...) are introduced into the silicon substrate (1) by microstructuring technology.

10. Arrangement according to claim 5, **characterized in that** the closure is formed by a planar, partially elastic polymer layer (5), such as silicone rubber, and **in that** preferably closing of the opening of the reaction chambers (10, 10', ...) is effected by displacement of the supply volume (4).

11. Arrangement according to claim 10, **characterized in that** gas, for example air, or an immiscible liquid (9) is present for the purpose of displacing the supply volume (4).

12. Arrangement according to any one of claims 5 to 11, **characterized in that** the reaction chambers (10, 10', ...) are formed by gel-filled cavities (3) which have a gel/supply volume phase boundary for the purpose of mass transfer.

13. Arrangement according to claim 12, **characterized in that** mass transfer between the gel-filled reaction chambers (10, 10', ...) can be suppressed by closure of the phase boundary.

## Revendications

1. Procédé pour l'analyse biochimique, à l'aide d'un réseau de microréactions disposé sur un substrat plan (1) comportant au moins deux chambres de réaction (10, 10', ...) formées par des positions du réseau (8, 8', ...) pour l'accueil de substances, qui réagissent les unes avec les autres chimiquement et/ou biochimique-ment, ledit procédé comprenant les opérations suivantes:
- on utilise des chambres de réaction (10, 10', ...) délimitées localement comme premier volume, les chambres de réaction (10, 10', ...) présentant respectivement un volume inférieur à 1 µl,
- les chambres de réaction (10, 10', ...) sont reliées entre elles par le biais d'un deuxième volume, appelé volume d'alimentation (4), et sont ouvertes en tant que cavités remplies de liquide aux fins de l'échange de substance de manière à être en contact avec le volume d'alimentation (4) et donc à pouvoir être simultanément remplies,
- des réactions chimiques et/ou biochimiques différentes quantitativement et/ou sur le plan de l'espèce se déroulent dans les diverses chambres de réaction (10, 10', ...), et
- l'échange de substance entre des chambres de réaction (10, 10', ...) et le volume d'alimentation (4) est autorisé ou empêché, en fonction des besoins, dans l'une ou les deux directions,
**caractérisé en ce que**
des études bioanalytiques avec des réactions couplées enzymatiquement sont réalisées par le biais d'un réseau de détecteurs électriques (2, 2', ...) sur les positions du réseau (8, 8', ...) en formant des produits de réaction (500) librement mobiles, des molécules piégeuses (110, 120, ...) d'une part et des molécules d'analyte d'autre part étant utilisées à cette fin, différentes molécules piégeuses (110, 120, ...) se trouvant sur les positions du réseau (8, 8', ...) de telle sorte que différentes molécules d'analyte peuvent être détectées sur chaque position spécifique du réseau, et
les chambres de réaction (10, 10', ...) sont séparées les unes des autres par pression d'un dispositif mécanique contre le substrat (1) de telle sorte qu'un passage des produits réactionnels (500) d'une première position du réseau (8) à une deuxième position du réseau (8') soit efficacement empêché.

2. Procédé selon la revendication 1, **caractérisé en ce que** le dispositif mécanique prend la forme d'un couvercle, d'un tampon, ou d'une membrane d'étanchéité.

3. Procédé selon la revendication 1 ou 2, **caractérisé en ce qu'**un échange de substance défini entre les chambres de réaction (10, 10', ...) et le volume d'alimentation s'effectue à un premier moment (t1) et l'échange de substance entre les chambres de réaction (10, 10', ...) est largement réprimé ou empêché à un deuxième moment (t2).

4. Procédé selon l'une des revendications précédentes, **caractérisé par** l'application lors du recyclage redox.

5. Agencement pour la réalisation du procédé selon l'une des revendications 1 à 4 à l'aide d'un réseau de microréactions sur un substrat plan (1),
le réseau de microréactions comportant au moins deux chambres de réaction (10, 10', ...) formées par des positions du réseau (8, 8', ...) pour l'accueil de substances provenant d'un volume d'alimentation (4),
les chambres de réaction (10, 10', ...) présentant respectivement un volume inférieur à 1 µl,
les chambres de réaction (10, 10', ...) étant des cavités remplies de liquide ouvertes aux fins de l'échange de substance de manière à être en contact avec le volume d'alimentation (4) et donc à pouvoir être simultanément remplies,
l'agencement étant conçu dans le but d'autoriser ou d'empêcher l'échange de substance entre des chambres de réaction (10, 10', ...) et le volume d'alimentation (4), en fonction des besoins, dans l'une ou les deux directions,
**caractérisé en ce que**
l'agencement est conçu pour la réalisation d'études bioanalytiques avec des réactions couplées enzymatiquement en formant des produits de réaction (500) librement mobiles et présente un réseau de détecteurs électroniques (2, 2', ...) sur les positions du réseau (8, 8', ...), différentes molécules piégeuses (110, 120, ...) se trouvant sur les positions du réseau (8, 8', ...) du réseau de microréactions de telle sorte que différentes molécules d'analyte puissent être détectées sur chaque position spécifique du réseau, et
un dispositif mécanique séparant les chambres de réaction (10, 10', ...) les unes des autres par pression contre le substrat (1) est prévu de telle sorte qu'un passage des produits réactionnels (500) d'une première position du réseau (8) à une deuxième position du réseau (8') soit efficacement empêché.

6. Agencement selon la revendication 5, **caractérisé en ce que** le dispositif mécanique prend la forme d'un couvercle, d'un tampon, ou d'une membrane d'étanchéité.

7. Agencement selon la revendication 5 ou 6, **caractérisé en ce que** le réseau plan (8, 8', ...) est déposé sur un substrat en silicium (1).

8. Agencement selon la revendication 7, **caractérisé en ce que** les chambres de réaction (10, 10', ...) sont séparées par une couche de polymère (11) déposée sur du silicium.

9. Agencement selon la revendication 7, **caractérisé en ce que** les chambres de réaction (10, 10', ...) sont incorporées dans le substrat en silicium (1) par la technique des microstructures.

10. Agencement selon la revendication 5, **caractérisé en ce que** l'occlusion est réalisée par une couche de polymère (5) plane partiellement élastique, comme par exemple du caoutchouc siliconé, et **en ce que**, de préférence, la fermeture de l'ouverture des chambres de réaction (10, 10', ...) s'effectue par refoulement du volume d'alimentation (4).

11. Agencement selon la revendication 10, **caractérisé en ce que**, pour le refoulement du volume d'alimentation (4), du gaz, par exemple de l'air, ou un liquide non miscible (9) est présent.

12. Agencement selon l'une des revendications 5 à 11, **caractérisé en ce que** les chambres de réaction (10, 10', ...) sont réalisées par des cavités (3) remplies de gel, qui possèdent une limite de phase gel/volume d'alimentation aux fins de l'échange de substance.

13. Agencement selon la revendication 12, **caractérisé en ce que** l'échange de substance des chambres de réaction (10, 10', ...) remplies de gel peut être réprimé par occlusion de la limite de phase.
